# EUROPEAN PATENT APPLICATION

(11) **EP 1 095 880 A1**
(43) Date of publication of application: **02.05.2001**
(21) Application number: 00307532.2
(22) Date of filing: 01.09.2000
(51) Int. Cl.: B65G 69/00

(54) **Powered wheel chocking device**

(30) Priority: 25.10.1999 US 426348
(71) Applicant: Kelley Company, Inc., Mequon, WI 53092 (US)
(72) Inventor: Yeary, David L., Louisville, Kentucky 40245 (US); Yeary, Paul B., Louisville, Kentucky 40245 (US); Uland, John R., New Albany, Indiana 47150 (US); Palus, Thomas J., Franklin, WI 53132 (US)
(74) Representative: Allman, Peter John

(57) **Abstract**

A powered wheel chock including a power supply, an above-ground drive mechanism, and a chock (70) driven by the drive mechanism and stored in a below-ground recess (62) when not in operation. In one embodiment, the drive mechanism includes at least one drive screw (106), at least one drive member (114) threadedly engaging the drive screw, and at least one drive link (122) connecting the drive member (114) to the chock (70), such that during operation, the chock (70) rises out of the recess (62) and moves into chocking position above ground level. Preferably, the drive mechanism is at least partially surrounded by a deflector plate (134) that protects the drive mechanism from damage. In another embodiment, the drive mechanism includes a cylinder (332), a piston rod (344) slidably positioned within the cylinder (332), and a drive link (364) connecting the mounting member (352) to the chock (314), such that during operation, the chock (314) rises out of the recess and moves into chocking position above ground level. Preferably the cylinder (332) is either hydraulic or pneumatic.

## Description

### FIELD OF THE INVENTION

The present invention generally relates to the field of vehicle restraining devices that prevent movement of a vehicle away from a desired location. More specifically, the present invention relates to powered wheel chocking devices.

### BACKGROUND OF THE INVENTION

Powered wheel chocking devices have been developed to allow a vehicle (e.g., a straight truck, a trailer with or without a tractor, etc.) to be secured at a desired location (e.g., a loading dock) so that loading, unloading or other operations can be performed without risk that the vehicle will unexpectedly move away. Such devices typically include a chock that can be selectively moved by a drive mechanism between a chocked position and an unchocked position.

One type of powered wheel chocking device is disclosed in U.S. Patent No. 5,249,905. This device includes a rigid chock that is stored underground within a pit in the driveway and is driven by a drive mechanism positioned underground. The rigid chock maintains a relatively constant profile, similar to a standard, manual wheel chock. In use, the chock is stored in the pit, and the vehicle is driven over the stored chock and parked in the desired location. Upon actuation of the drive mechanism, the chock is pulled up out of the pit and moved into engagement with a wheel of the vehicle.

Another powered wheel chocking device is disclosed in Figure 11 of U.S. Patent No. 5,375,965. Similar to the previously-discussed device, this device includes a chock and a drive mechanism that are both stored underground in a trench in the driveway. Unlike the previously-discussed device, this device includes a collapsible chock that raises upon contact with the wheel. When a vehicle enters the dock, it drives over the collapsed chock and is parked in the desired location. The chock is then driven into contact with the wheel by the underground drive mechanism.

Figure 1 of U.S. Patent No. 5,375,965 discloses another type of powered wheel chocking device. This device includes a collapsible chock and a drive mechanism that are, at all times, positioned above ground. The collapsible chock can be moved between lowered and raised positions, which correspond with inoperative and operative positions, respectively. In the lowered position, the chock has a relatively low profile to allow vehicles to drive directly over the chock. The chock can then be moved longitudinally into place and extended into the raised position at the wheel.

Another example of an above-ground, collapsible, powered wheel chocking device has been designed by Michel Roux, and is disclosed in European Patent Publication No. 537,075. The Roux device includes an above-ground collapsible chock that is driven by an above-ground drive mechanism between an inoperative lowered position and an operative raised position. The Roux device is designed to maintain the chock in the lowered position until the chock has been moved longitudinally into contact with the vehicle wheel. After contact with the vehicle wheel, further movement of the drive mechanism causes the collapsible chock to pivot to the raised position to secure the vehicle wheel.

### SUMMARY OF THE INVENTION

Utilizing an underground drive mechanism requires significant excavation of the driveway. A trench must be dug over the entire length of the drive mechanism and chock. This typically involves removing a lengthy strip of concrete or asphalt, which may be costly.

Storing a chock (whether rigid or collapsible) above ground can also create various problems. Since rigid chocks cannot be driven over easily, they must be placed in front of the wheel using a lateral motion. Therefore, using above-ground rigid chocks requires motion capabilities in the lateral direction in addition to the usual longitudinal direction. Collapsible chocks alleviate this problem by allowing the vehicle wheel to drive directly over the collapsed chock, and only longitudinal motion is then needed to secure the vehicle's wheel. However, the collapsibility of these chocks is limited. They still create a bump that must be driven over, potentially disrupting the cargo in the vehicle or the comfort of the driver. Furthermore, the above-ground chocks can sustain damage when the vehicles drive over them and/or from snow removal equipment.

To alleviate these problems, the present invention provides a powered wheel chocking device that incorporates a drive mechanism positioned above ground and a rigid chock that is stored in a small recess below ground. Placing the drive mechanism above-ground alleviates the need for excavating a long trench. Storing the rigid chock below ground eliminates the vehicle disruption and damage concerns that can accompany above-ground collapsible chocking systems.

More specifically, the invention provides a powered wheel chocking device having a power supply, an above-ground drive mechanism powered by the lower supply, and a chock driven by the drive mechanism and stored in a below-ground recess when not in operation. In one embodiment, the drive mechanism includes at least one drive screw, at least one drive member threadedly engaging the drive screw, and at least one drive link connecting the drive member to the chock. In operation, the chock rises out of the recess and moves into an operative position above ground level. Preferably the drive mechanism of this embodiment is at least partially surrounded by a deflector plate that protects the drive mechanism from damage.

In another embodiment, the drive mechanism includes a cylinder, a piston rod slidably positioned within the cylinder, a mounting member fastened to the piston, and a drive link connecting the mounting member to the chock. In operation the chock rises out of the recess and moves into an operative position above ground level. Preferably the cylinder is either hydraulic or pneumatic.

### BRIEF DESCRIPTION OF THE DRAWINGS

Fig. 1 is a perspective view of a wheel chocking device embodying the present invention and positioned at a loading dock.
Fig. 2 is a side section view of the wheel chocking device of Fig. 1 and illustrating two potential chocking positions.
Fig. 3 is a top view of the wheel chocking device of Fig. 1.
Fig. 4 is an enlarged side section view of the wheel chocking device with the chock in an inoperative position.
Fig. 5 is the front section view of Fig. 4 with the chock in the inoperative position.
Fig. 6 is a perspective view of an alternative embodiment of the present invention.
Fig. 7 is a side section view of the wheel chocking device of Fig. 6 positioned at a loading dock with the chock in a raised and operative position at a vehicle wheel.
Fig. 8 is a side section view of the wheel chocking device of Fig. 6 illustrating the action of the chock from the inoperative position to the operative position.
Fig. 9 is a top view of the wheel chocking device of Fig. 6.
Fig. 10 is the section view taken along line 10-10 in Fig. 6.
Fig. 11 is a partial perspective view of an alternative embodiment of the present invention in an inoperative position.
Fig. 12 is a side view of the wheel chock shown in Fig. 11.
Fig. 13 is the view of Fig. 11 with the chock in an operative position.
Fig. 14 is a perspective view of the wheel chock of Fig. 13.
Fig. 15 is a section view taken along line 15-15 of Fig. 14.

### DETAILED DESCRIPTION

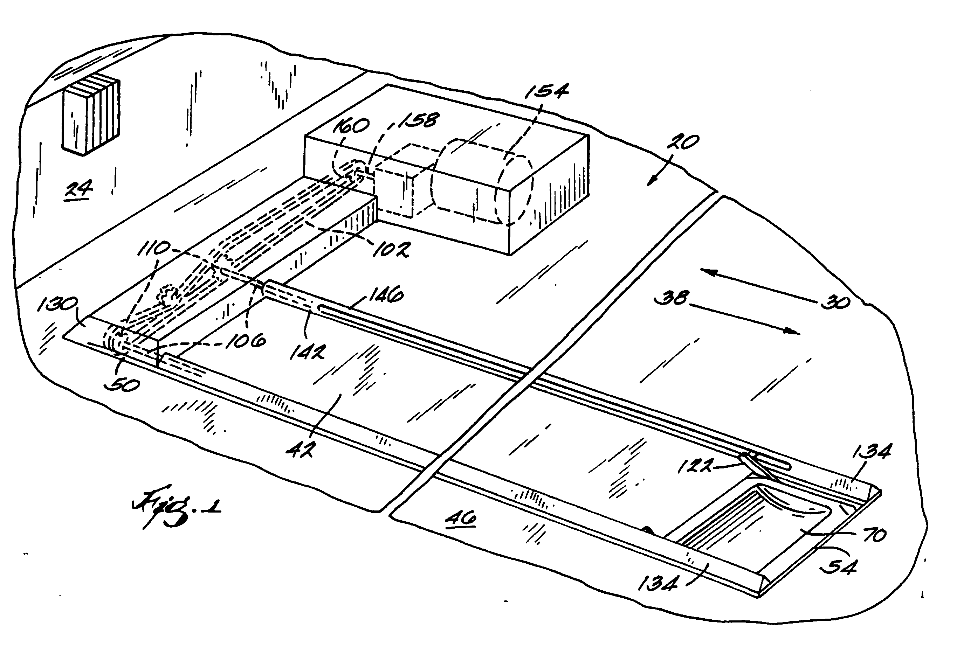

As shown in Fig. 1, the illustrated wheel chocking device 20 is specifically designed to be positioned adjacent to a loading dock 24 so that a vehicle backed against the loading dock 24 can be secured in position. As used herein, the rearward direction denotes movement toward the loading dock 24 as represented by the arrow 30, and the frontward direction is represented by the arrow 38 and is opposite to the rearward direction 30. General directional reference of arrows 30 and 38 will be denoted as longitudinal. General directional reference in the horizontal direction perpendicular to the arrows 30 and 38 will be denoted as lateral.

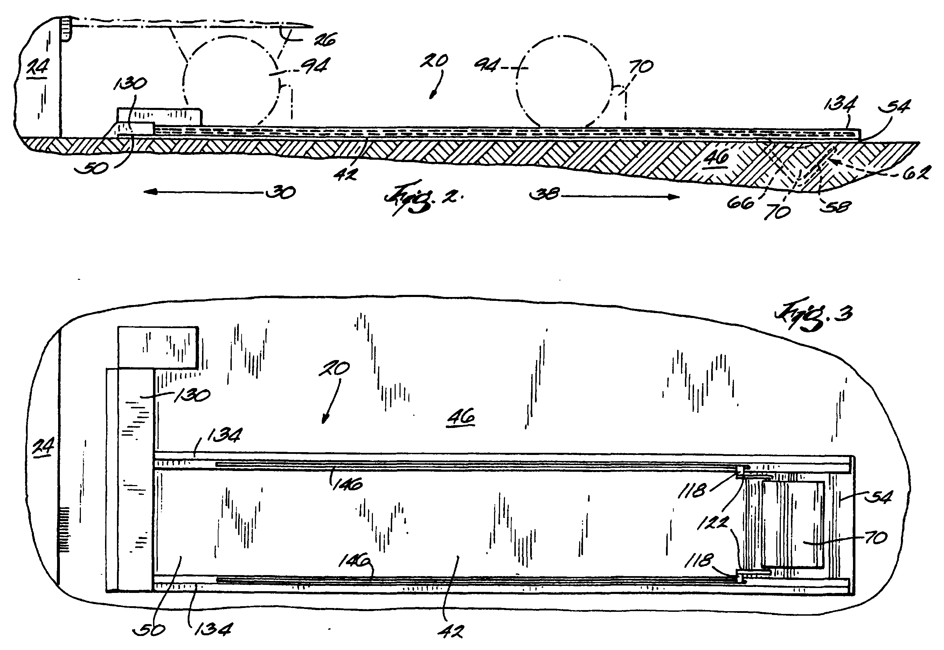

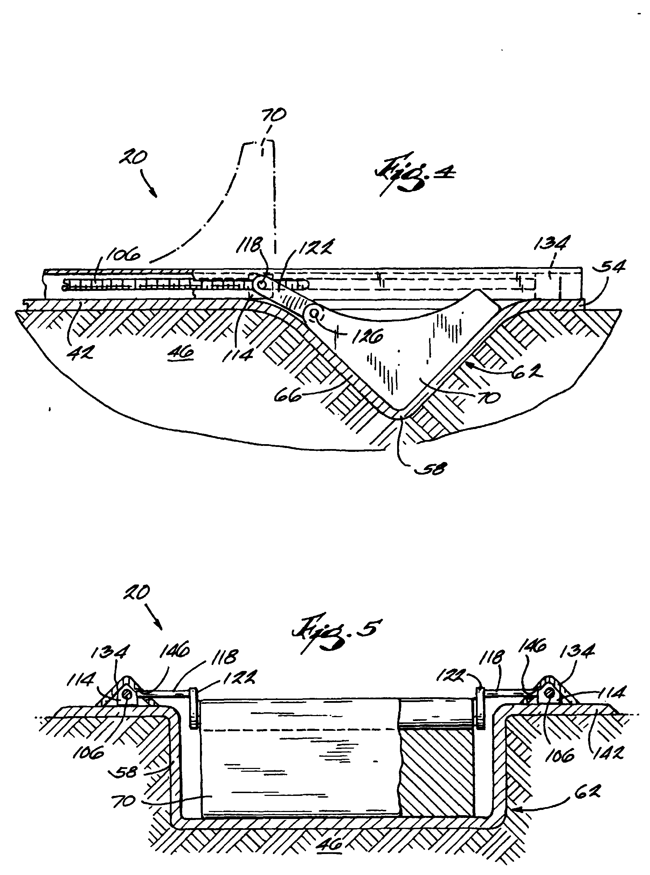

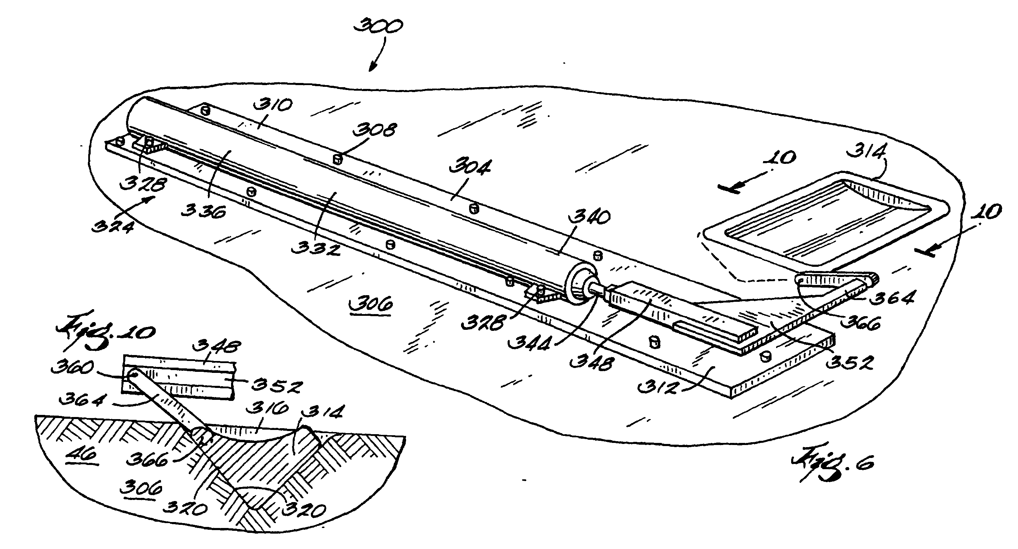

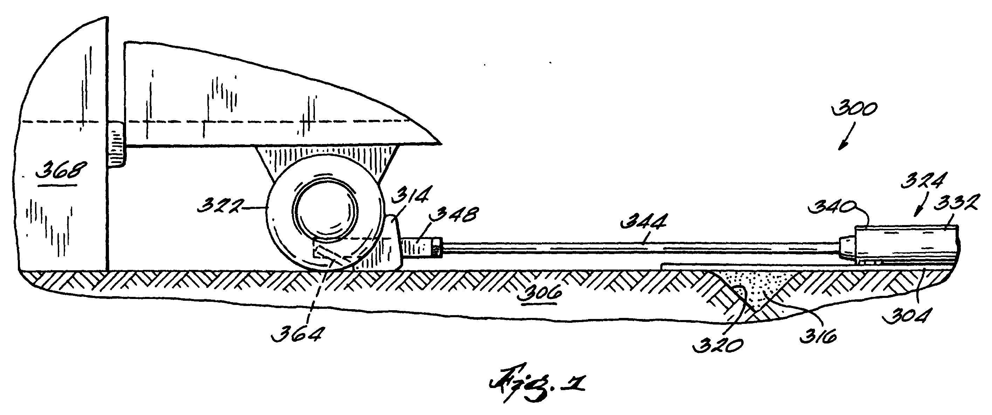

Referring to Figs. 1-5, the wheel chocking device 20 generally includes a base plate 42 that is designed to be secured to a driveway 46. The base plate 42 is preferably made from steel or any other suitable material, and has a rearward end 50 and a frontward end 54. The frontward end 54 (see Figs. 2 and 4-5) includes a recessed portion 58 that fits into a recess 62 excavated in the driveway 46. Preferably the recessed portion 58 includes a ramped surface 66 at the rearward end of the recessed portion 58, the purpose of which will be described in detail below. It is important to note that the recessed portion 58 need not be the particular "V" shape as shown in Figs. 4-5, but can be other suitable shapes or variations.

The wheel chocking device 20 also includes a chock 70 that is preferably rigid. The chock 70 can be made from rubber, plastic, metal, or any other suitable material. The chock 70 is stored in the recessed portion 58 such that it rests on the ramped surface 66. Most of the chock 70 lies below the top surface of the base plate 42. This allows vehicle wheels 94 (represented in phantom lines in Fig. 2) to drive directly over the chock 70 with little or no impact, minimizing any damage to the chock 70 and minimizing disruption to the vehicle. Furthermore, damage to the chock 70 from snow removal equipment (not shown) is also minimized by the underground chock storage.

The wheel chocking device 20 further includes an above-ground drive mechanism. Positioning the drive mechanism above ground advantageously eliminates the need to dig a long trench in the concrete or asphalt driveway 46. Referring to Fig. 1, the drive mechanism includes a laterally extending chain 102 that drives two longitudinally-extending drive screws 106. The chain 102 may be a common metallic or plastic chain, or alternatively may be a toothed drive belt of rubber or plastic. The power from the chain 102 is transmitted to the drive screws 106 via sprockets 110 mounted to the rearward ends of the drive screws 106. The drive screws 106 are spaced apart laterally and are individually mounted to and supported at both the rearward end 50 and the frontward end 54 of the base plate 42 using bushings or bearings (not shown). It is important to note that, while the preferred embodiment incorporates two drive screws 106, the invention could also include a single drive screw.

The drive mechanism (see Figs. 4-5) further includes drive members 114 that threadedly engage the drive screws 106. The drive members 114 are made from metal, plastic, or other suitable material. In the preferred embodiment, drive pins 118 extend laterally toward the center of the base plate 42 from each of the drive members 114. The drive pins 118 pivotally support the rearward ends of longitudinally extending drive links 122. The frontward ends of the drive links 122 are pivotally connected to opposite ends of chock pins 126 (see Fig. 4) that extend laterally through a bore (not shown) in the rearward portion of the chock 70.

As best shown in Fig. 1, the drive mechanism is substantially covered by a cover plate 130 and deflector plates 134. The cover plate 130 is removably mounted over at least a portion of the rearward end 50 of the base plate 42 and protects at least a portion of the chain 102, the sprockets 110 and the rearward ends of the drive screws 106 from damage. The cover plate 130 is preferably made of steel or any other suitable material. The cover plate 130 includes apertures (not shown) for allowing the drive screws 106 to pass therethrough.

The deflector plates 134 extend longitudinally from the cover plate 130 to substantially cover and protect the remainder of the drive screws 106. In the preferred embodiment, the deflector plates 134 are made from angled steel and are removably fixed to the base plate 42. The deflector plates 134 each include an elongated slot 146 that allows the corresponding drive pin 118 to extend therethrough and move longitudinally in the rearward and frontward directions as the corresponding drive members 114 move on the drive screws 106. The elongated slots 146 extend over a sufficient length of the deflector plates 134 to allow uninhibited longitudinal motion of the drive pins 118 over the entire range necessary for operation of the device 20.

The deflector plates 134 protect the drive screws 106 from damage caused by vehicles using the loading dock 24, and more commonly from snow removal equipment used to clear the driveway 46. It is important to note that the deflector plates 134 may be made of any suitably hard and protective material and need not be angled as shown in the preferred embodiment. Furthermore, while the preferred embodiment incorporates two deflector plates 134, alternative embodiments could use only one deflector plate.

The wheel chocking device 20 further includes a power mechanism for providing power to the drive mechanism. Referring to Fig. 1, the illustrated power mechanism is in the form of an electric motor 154 interconnected with the chain 102 by a drive shaft 158 and drive sprocket 160. The power mechanism may include common features known in the art such as a sensing mechanism (not shown) for sensing the longitudinal position of the drive members 114 or a torque-limiting device (not shown), such as a torque or current sensor, to deactivate the power mechanism.

The above-noted mechanisms for sensing the position of the wheel chock can he used to provide signals to a communication system. For example, the loading dock can be provided with a dock lighting system for communicating with the dock workers and a driver lighting system for communicating with the driver of the vehicle. Each lighting system can include a red light and a green light. When the chock is in the stored position, the driver lighting system will show a green light, indicating that the driver can enter or exit the loading dock, and the dock lighting system will show a red light, indicating that no loading or unloading operations should be performed. After the vehicle is positioned at the dock and the chock is activated to move toward the wheel or the vehicle, both lighting systems will show a red light and an audible warning can be provided to indicate that the chock is being moved. After the chock is secured at the vehicle wheel, the dock lighting system will show a green light indicating that loading and unloading operations can be performed, and the driver lighting system will remain red, indicating that the vehicle is secured and that the driver should not attempt to pull away from the dock. After loading and unloading operations are complete, the chock is moved back toward the stored position, during which time both lighting systems will show a red light and an audible warning will indicate that the chock is being moved.

In operation, as best shown in Figs. 2 and 4, the chock 70 is stored in the recessed portion 58. As a vehicle 26 backs into the dock 24, the wheel 94 rolls over the recessed chock 70 and stops when the vehicle 26 comes to rest at the desired location. At this point, the drive mechanism is activated, and the motor 154 and chain 102 transmit power to the drive screws 106 via the sprockets 110. As the drive screws 106 rotate, the drive members 114 and their corresponding drive pins 118 move in the rearward direction 30. The drive links 122 also move in the rearward direction and exert force on the chock pin 126 that causes the chock 70 to move in the rearward direction. As the chock 70 begins to move rearward, it slides up the ramped surface 66, thereby facilitating movement of the chock 70 out of the recessed portion 58. Eventually, the bottom of the chock 70 is parallel to the horizontal portion of the base plate 42 and slides longitudinally rearward on top of the base plate 42. The chock 70 is then moved rearward until it contacts the wheel 94 and secures the vehicle at the loading dock 24.

Movement of the chock 70 back to the stored position is accomplished in substantially the reverse order by simply reversing the direction of the motor 154 and chain 102 such that the drive screws 106 rotate in the opposite direction. This moves the drive members 114 in the frontward direction until the chock 70 has been returned to the recessed portion 58.

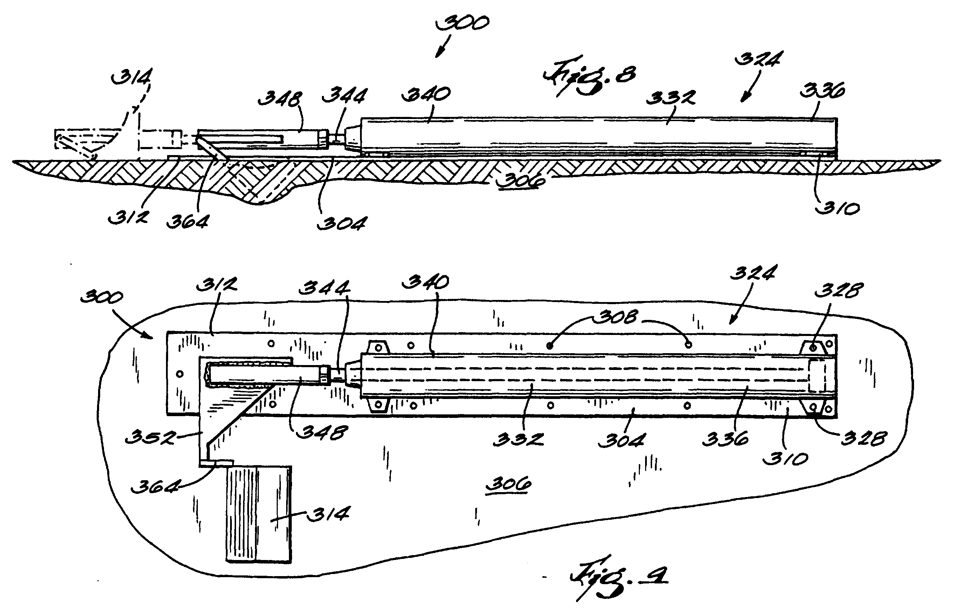

Figs. 6-10 show a powered wheel chocking device 300 that reflects an alternative embodiment of the present invention. The wheel chocking device 300 includes a base plate 304 designed to be secured to the driveway 306 using fasteners 308. The base plate 304 has a frontward end 310 and a rearward end 312, and is made from steel or other suitable material.

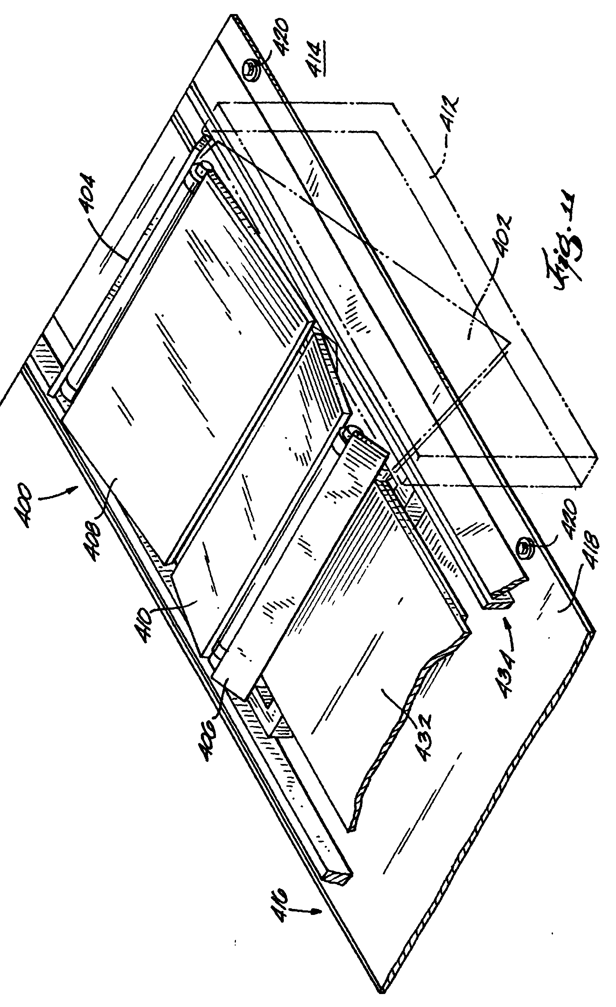

The device 300 also includes a chock 314 that is stored in a recess 316 excavated in the driveway 306. The rearward end of the recess 316 includes a ramped surface 320 for facilitating the movement of the chock 314 into and out of the recess 316. It is important to note that the recess 316 need not be the particular "V" shape as shown in Figs. 7, 8 and 10, but can be any other suitable shape or variation. Furthermore, the recess 316 may, but need not, be fitted with a similarly contoured recessed portion (not shown) made from steel or any other suitable material.

In this alternative embodiment, the chock 314 is stored in the recess 316 such that it rests on a ramped surface 320, and substantially all of the chock 314 lies below the driveway 306. This allows vehicle wheels 322 (shown in Fig. 7) to roll directly over the chock 314 with little or no impact, minimizing any damage to the chock 314 and minimizing disruption to the vehicle. Furthermore, damage to the chock 314 from snow removal equipment (not shown) is also minimized by the underground chock storage.

The wheel chocking device 300 further includes an above-ground drive mechanism 324 that is mounted to the base plate 304 using fasteners 328. Mounting the drive mechanism 324 above ground eliminates the need to dig a trench in the concrete or asphalt driveway 306. The drive mechanism 324 includes a longitudinally-oriented cylinder 332 having a frontward end 336 and a rearward end 340. The cylinder 332 may be operated using hydraulics, pneumatics, or any oilier suitable method. A piston rod 344 is positioned within the cylinder 332 and extends from the rearward end 340 for sliding movement in the longitudinal direction.

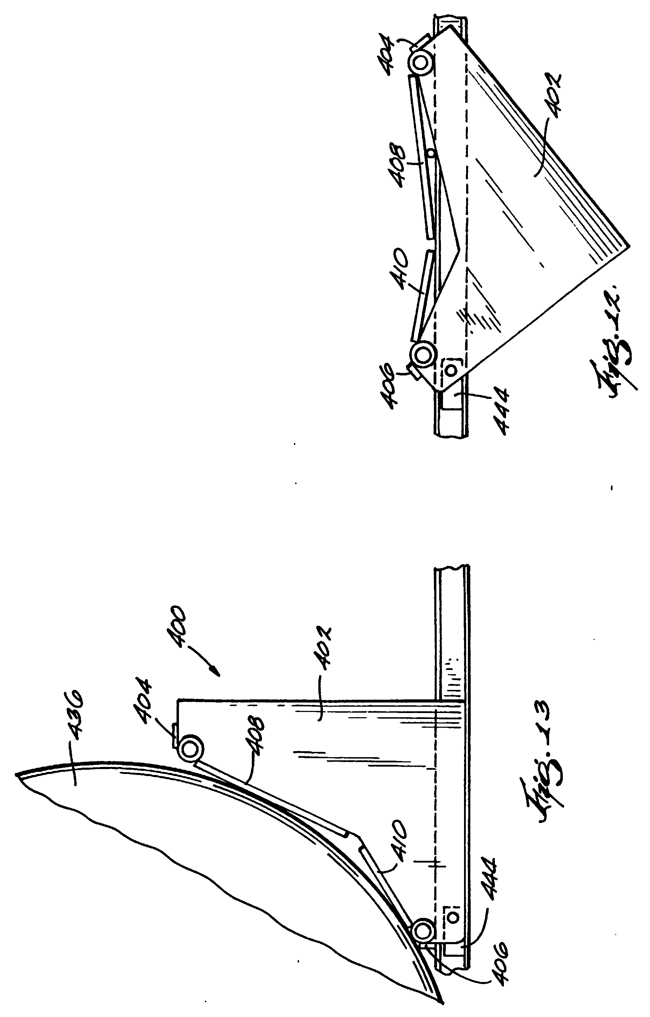

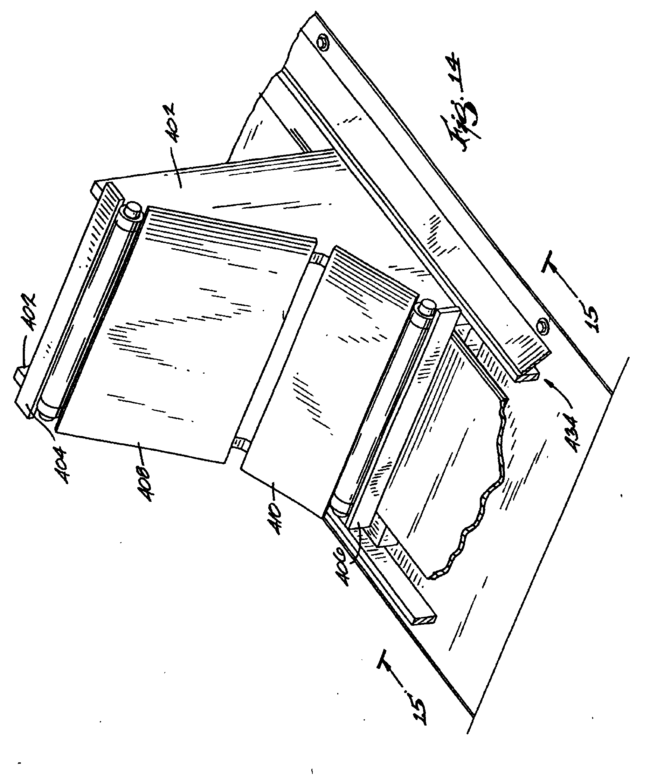

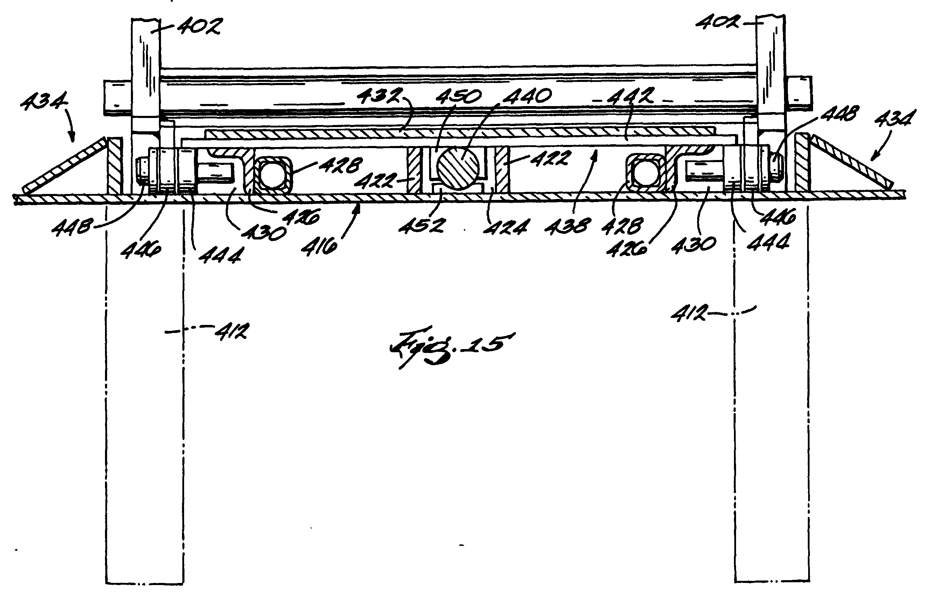

A piston extension 348 removably extends from the rearward end of the piston rod 344, and a mounting member 352 is preferably welded to the rearward end of the piston extension 348. The illustrated mounting member 352 is substantially triangular and extends laterally away from the piston extension 348 towards the recess 316. The mounting member 352 is made from steel or any other suitable material. The mounting member 352 has a drive pin 360 (see Fig. 10) extending laterally therefrom for pivotal connection to a longitudinally oriented drive link 364. The drive pin 360 pivotally supports the rearward end of the drive link 364. The frontward end of the drive link 364 is pivotally connected to one end of a chock pin 366 that extends laterally through a bore (not shown) in the chock 314. The chock pin 366 links the drive mechanism 324 to the chock 314. The drive pin 360, drive link 364, and chock pin 366 are all made from steel or any suitable material.

As best shown in Fig. 9, the above-ground drive mechanism 324 is substantially offset laterally from both the chock 314 and the recess 316. Due to this offset, the drive mechanism 324 need not be covered for protection from the wheels 322 of the vehicles. Likewise, no cover is needed to further protect the drive mechanism 324 from damage caused by snow removal equipment, but a guard rail (not shown) could he mounted around the drive mechanism 324 if desired.

The wheel chocking device 300 further includes a power unit (not shown) for driving the cylinder 332. The power unit may be either hydraulic, pneumatic, or other, in conjunction with the type of cylinder 332 used. The power unit may include common features known in the art such as a pressure sensing mechanism (not shown) for determining when the chock 314 is properly restraining the vehicle wheel 322. Such a sensing mechanism for sensing the position of the wheel chock 314 can be used to provide signals to a communication system, as described above.

In operation, as best shown in Figs. 7 and 8, the chock 314 is stored in the recess 316. As a vehicle backs toward the dock 368, the wheel 322 rolls over the recessed chock 314 and stops when the vehicle comes to rest. At this point, the cylinder 332 is activated, causing the piston rod 344 to extend in the rearward direction. The piston extension 348, mounting member 352, and drive pin 360 move rearward as the piston rod 344 extends, causing the drive link 364 to move in the rearward direction. The drive link 364 exerts a force on the chock pin 366 that causes the chock 314 to move in the rearward direction.

As the chock 314 begins to move rearward, it slides up the ramped surface 320, thereby facilitating movement of the chock 314 out of the recess 316. Eventually, the bottom of the chock 314 is parallel to the horizontal portion of the base plate 304 and slides longitudinally rearward on top of the base plate 304. The chock 314 is then moved rearward until it contacts the wheel 322 and secures the vehicle at the loading dock 368.

Movement of the chock 314 back to the stored position is accomplished in substantially the reverse order by simply reversing the motion of the piston rod 344. This moves the drive member 364 in the frontward direction until the chock 314 has been lowered into the recess 316.

Figs. 11-15 illustrate another embodiment of the present invention. This embodiment includes a wheel chock 400 made from two sides plates 402, upper and lower braces 404,406 coupling the side plates 402, and upper and lower hinge plates 408,410 pivotally connected to the side plates 402. As with the previous embodiments, the chock 400 is designed to he movable between an operative position (Fig. 13) and a stored position (Fig. 12), which is below ground in a recess 412. In this embodiment, since the chock 400 is formed primarily by two side plates 402, the recess 412 formed in the driveway 414 need only include two thin slots, as opposed to the wider recess required for the above-described embodiments. This significantly reduces the cost of installing the wheel chocking device.

Referring to Fig. 12, it can be seen that the pivotal mounting of the hinge plates 408,410 allows the chock 400 to achieve a lower stored position. More specifically, the hinge plates 408,410 will pivot away from the side plates 402 when the chock 400 is in the stored position, thereby allowing the side plates 402 to move further into the recess 412. When the chock 400 is raised to the operative position, the hinge plates 408,410 will move back into contact with the side plates 402.

The illustrated embodiment further has a base frame 416 including a base plate 418 that is designed lobe secured to the driveway 414 by a series of fasteners 420. For example, the illustrated base plate 418 is secured to a concrete or asphalt driveway 414 in front of the loading dock. Referring specifically to Fig. 15, inner side walls 422 are secured to the base plate 418 and define a space 424 for housing a portion of the drive mechanism, as described below in more detail. Outer side walls in the form of guide members 426 and support members 428 define side slots 430 for guiding the drive mechanism, as described below in more detail. The inner side walls 422 and guide members 426 cooperatively provide a non-securing support for a cover plate 432. That is, the cover plate 432 rests upon but is not secured to the inner side walls 422 and guide members 426. Side angles 434 are secured to the longitudinal edges of the base plate 418 to protect the wheel chocking device from potential damage from snow plows. The side angles 434 could be made detachable (e.g., by attaching with bolts) from the base plate 418.

The cover plate 432 extends along substantially the entire length of the base frame 416 to provide a protective cover for the drive mechanism. The cover plate 432 allows a vehicle to drive on top of the wheel chocking device without damaging any of the components of the drive mechanism. The cover plate 432 is allowed to move vertically away from the base frame 416 or "float" to allow portions of the drive mechanism to pass between the base frame 416 and the cover plate 432. This allows the drive mechanism, which is positioned below the cover plate 432, to be interconnected with the chock 400, which is positioned above the cover plate 432.

The above-described chock 400 is designed to slide longitudinally (i.e., in the frontward and rearward directions) relative to the base frame 416 and cover plate 432. Such sliding motion allows the chock 400 to be moved into contact with a vehicle wheel 436 positioned on the cover plate 432. The chock 400 is moved and raised by the drive mechanism. The drive mechanism is similar to that disclosed in published PCT application WO 97/49626, which is incorporated herein by reference in its entirety.

The illustrated drive mechanism includes, inter alia, a slide member 438 coupled to the chock 400, and a drive screw 440 for driving the slide member 438.

The slide member 438 comprises a slide plate 442 slidably positioned between the base frame 416 and the cover plate 432. A slide block 444 is secured to each side edge of the slide plate 442. Each slide block 444 includes a hole for facilitating pivotal engagement with two coupling members 446 secured to the side plates 402. The pivotal engagement is provided by two studs 448 that extend through the slide blocks 444 and the coupling members 446. The studs 448 also extend into the slots 430 formed by the guide members 426, thereby holding the chock 400 engaged with the base frame 416. Because of the pivotal engagement between the slide member 438 and the side plates 402, it can be seen that movement of the slide member 438 will result in movement of the chock 400.

The slide member 438 further includes a drive block 450 secured to the bottom surface of the slide plate 442. The drive block 450 includes internal threads for threadedly engaging the drive screw 440. The drive block 450 includes an open portion such that the internal threads do not engage the entire outer circumference of the drive screw 440. The open portion of the drive block 450 allows an arcuate segment of the drive screw 440 to he supported by a series of screw supports 452 spaced along the longitudinal length of the drive screw 440. The screw supports 452 are preferably made from a low friction material (e.g., brass, plastic, etc.) to provide low friction engagement between the drive screw 440 and the screw supports 452. In the illustrated embodiment, the screw supports 452 are made from a polymer material, such as ultra high molecular weight polyethylene.

The illustrated drive screw 440 is driven by a power mechanism in the form of an electric motor (not shown) similar to what is disclosed above in the embodiment of Figs. 1-5. The power mechanism can be provided with a torque-limiting device, such as a torque or current sensor, to deactivate the power mechanism when a vehicle wheel 436 has been chocked or when the chock 400 has reached the stored position. As another alternative, a proximity sensor can be used to sense when the chock 400 is in the stored position. The use of a proximity sensor is advantageous in that it is a positional sensor that directly measures the position of the drive member, as opposed to a conditional sensor that measures a certain condition of the chock 400 and infers the position of the chock 400.

The above-noted mechanisms for sensing the position of the wheel chock 400 can he used to provide signals to a communication system. For example, the loading dock can be provided with a dock lighting system for communicating with the dock workers and a driver lighting system for communicating with the driver of the vehicle. Each lighting system can include a red light and a green light. When the chock 400 is in the stored position, the driver lighting system will show a green light, indicating that the driver cart enter or exit the loading dock, and the dock lighting system will show a red light, indicating that no loading or unloading operations should be performed. After the vehicle is positioned at the dock and the chock 400 is activated to move toward the wheel of the vehicle, both lighting systems will show a red light and an audible warning can be provided to indicate that the chock 400 is being moved. After the chock 400 is secured at the vehicle wheel, the dock lighting system will show a green light indicating that loading and unloading operations can be performed, and the driver lighting system will remain red, indicating that the vehicle is secured and that the driver should not attempt to pull away from the dock. After loading and unloading operations are complete, the chock 400 is moved back toward the stored position, during which time both lighting systems will show a red light and an audible warning will indicate that the chock 400 is being moved.

Movement of the device is initiated by activating the power mechanism and rotating the drive screw 440, which results in movement of the slide member 438 in the rearward direction. Such movement of the slide member 438 causes the chock 400 to be pulled out of the recess 412 and into a raised, operative position. Once the vehicle wheel 436 has been engaged by the chock 400, the drive mechanism is automatically deactivated by an appropriate mechanism (e.g., a torque sensor, current sensor, or strain gage). Movement of the chock 400 back to the stored position is accomplished in substantially the reverse order.

The foregoing description of the present invention has been presented for purposes of illustration and description. Furthermore, the description is not intended to limit the invention to the form disclosed herein. Consequently, variations and modifications commensurate with the above teachings, and the skill or knowledge of the relevant art, are within the scope of the present invention. The embodiments described herein are further intended to explain best modes known for practicing the invention and to enable others skilled in the art to utilize the invention in such, or other, embodiments and with various modifications required by the particular applications or uses of the present invention. It is intended that the appended claims be construed to include alternative embodiments to the extent permitted by the prior art.

## Claims

1. A loading dock comprising:
a driveway having a recess;
a drive mechanism positioned above said driveway; and
a chock driven by said drive mechanism and stored in said recess.

2. The loading dock of claim 1, wherein said chock is rigid.

3. The loading dock of claim 1, wherein said drive mechanism includes:
at least one drive screw;
at least one drive member threadedly engaging said drive screw; and
at least one drive link connecting said drive member to said chock.

4. The loading dock of claim 3, wherein said drive link pivotally connects said drive member to said chock.

5. The loading dock of claim 3, further including a deflector plate at least partially surrounding said drive mechanism.

6. The loading dock of claim 5, wherein said deflector plate is angled relative to said driveway.

7. The loading dock of claim 1, wherein said drive mechanism includes:
a cylinder;
a piston rod slidably positioned within said cylinder; and
a drive link connecting said piston rod to said chock.

8. The loading dock of claim 7, wherein said cylinder is hydraulic.

9. The loading dock of claim 7, wherein said cylinder is pneumatic.

10. The loading dock of claim 7, further comprising a triangulated mounting member connecting said piston rod to said drive link.

11. A powered wheel chock comprising:
a chock movable between operative and inoperative positions;
a drive mechanism for moving said chock; and
a deflector plate at least partially surrounding said drive mechanism.

12. The powered wheel chock of claim 11, wherein said chock is stored in a below-ground recess while in said inoperative position.

13. The powered wheel chock of claim 11, wherein said deflector plate is angled.

14. The powered wheel chock of claim 11, wherein said drive mechanism includes:
at least one drive screw;
at least one drive member threadedly engaging said drive screw; and
at least one drive link connecting said drive member to said chock.

15. The powered wheel chock of claim 14, wherein said drive link pivotally connects said drive member to said chock.
